# EUROPÄISCHE PATENTSCHRIFT

(11) **EP 4 072 724 B1**
(45) Veröffentlichungstag und Bekanntmachung des Hinweises auf die Patenterteilung: **29.05.2024**
(21) Anmeldenummer: 20835696.4
(22) Anmeldetag: 10.12.2020
(51) Int. Cl.: B01J 20/20

(54) **VERFAHREN ZUM ENTFERNEN VON QUECKSILBER**
METHOD OF REMOVING MERCURY
PROCÉDÉ D'ÉLIMINATION DE MERCURE

(30) Priorität: 13.12.2019 DE 102019134385
(43) Veröffentlichungstag der Anmeldung: 19.10.2022
(73) Patentinhaber: Siempelkamp NIS Ingenieurgesellschaft mbH, 63755 Alzenau (DE)
(72) Erfinder: LOEB, Andreas, 61194 Niddatal (DE); THOMA, Markus, 63867 Johannesberg (DE); BECKER, Markus, 63801 Kleinostheim (DE); PRÜLLAGE, Anna, 69221 Dossenheim (DE); SCHNEIDER, Laura, 63065 Offenbach (DE)
(74) Vertreter: Stoffregen, Hans-Herbert
(86) Internationale Anmeldenummer: PCT/EP2020/085488
(87) Internationale Veröffentlichungsnummer: WO 2021/116274

(56) Entgegenhaltungen:
- WO-A1-2011/146620
- WO-A1-2018/149862
- DE-A1- 3 928 201

## Beschreibung

Die Erfindung bezieht sich auf ein Verfahren zum Entfernen von in und/oder an einer Komponente, insbesondere der Öl- und/oder Gasförderindustrie, und/oder deren Oberfläche ab- und/oder eingelagertem Quecksilber und/oder deren Verbindungen.

In bzw. auf Leitungen und Behältnissen, die bei der Öl- und/oder Gasförderindustrie zum Einsatz gelangen, lagern sich Quecksilber und deren Verbindungen in Oxidschichten ab. Entsprechende Komponenten sind aufgrund des Quecksilbers als Sondermüll zu behandeln, sodass eine aufwendige und mit hohen Kosten verbundene Entsorgung erfolgen muss.

Der DE 37 42 235 A1 ist ein Verfahren zur Behandlung von Bodenmaterial zu entnehmen, um Metalle aus Metallverbindungen in Gesteinsmaterial zu entfernen.

Die WO 2011/146620 A1 bezieht sich auf ein Verfahren zum Entfernen von Quecksilber, das auf Aktivkohle adsorbiert ist. Zum Entfernen von Quecksilber kann Essigsäure benutzt werden. Alternativ kann zum Entfernen von Quecksilbercyanid auch Oxalsäure verwendet werden.

Aufgabe der vorliegenden Erfindung ist es, ein Verfahren zur Verfügung zu stellen, bei dem Quecksilber und/oder Quecksilberverbindungen von entsprechenden Komponenten entfernt werden kann bzw. können, sodass eine übliche Entsorgung der Komponenten möglich ist.

Zur Lösung der Aufgabe sieht die Erfindung im Wesentlichen vor ein Verfahren, das zumindest die nachstehenden Verfahrensschritte umfasst:
a) Behandeln der Komponente mit einer die Komponente um- und/oder durchströmenden im Kreislauf geführten sauren Lösung durch Zugabe einer ersten Säure, mittels der der pH-Wert der Lösung eingestellt wird,
b) Zudosieren von Oxalsäure als zweite Säure,
c) nach zumindest teilweiser Abreaktion der Oxalsäure Zuführen der Lösung zu zumindest einer Quecksilber und/oder Quecksilberionen bindenden Einrichtung, die in einem von dem Kreislauf ausgehenden Bypass angeordnet ist.

Dabei können die Verfahrensschritte a) und b) gegebenenfalls gleichzeitig durchgeführt werden, und zwar dann, wenn ein zusätzlicher Oxidationsschritt nicht erforderlich ist.

Durch die Konzentration der ersten Säure, wie z. B. Methylsulfonsäure, wird der pH-Wert in der Lösung vorgegeben bzw. beeinflusst. Bevorzugterweise sollte die Konzentration der ersten Säure in der Lösung derart eingestellt sein, dass sich ein pH-Wert zwischen 2 und 5,5, insbesondere im Bereich zwischen 2,3 und 5 ergibt.

Des Weiteren soll durch die erste Säure erreicht werden, dass die durch die Oxalsäure herausgelösten Ionen nicht ausfallen.

Zumindest teilweise Abreaktion der Oxalsäure schließt auch die Möglichkeit ein, dass die Oxalsäure vollständig abreagiert ist.

Das Führen der Lösung durch die Quecksilber und/oder Quecksilberionen bindende Einrichtung erfolgt grundsätzlich dann, wenn Metallionen der auf der Komponente vorhandenen Oxidschicht nicht mehr in Lösung gehen bzw. sich ein Gleichgewicht zwischen komplexierten Metallionen, die neben den der Oxidschicht auch Metallionen der Komponente einschließen, und freier Oxalsäure eingestellt hat.

Das erfindungsgemäße Verfahren dient dazu, Quecksilber und deren Verbindungen von Oberflächen einer oder mehrerer Komponenten, die insbesondere in der Öl- und/oder Gasförderindustrie eingesetzt werden, zu entfernen.

Nach der erfinderischen Lehre werden die Oberflächenbeläge auf den Komponenten, wie Siderit [Fe[CO₃]], Goethit [α-Fe³⁺O(OH)], Magnetit [Fe₃O4], Hämatit [Fe₂O₃], Huntit [CaMg₃[CO₃]₄] u. a., sowie ein Teil des Grundmaterials abgetragen, und zwar insbesondere in einem Umfang zwischen 0,1 µm und 1000 µm, insbesondere zwischen 0,1 µm und 500 µm, besonders bevorzugt zwischen 0,1 µm und 250 µm. Somit ist sichergestellt, dass die Komponente selbst nicht mehr mit Quecksilber oder deren Verbindungen kontaminiert ist, sodass eine Standardentsorgung erfolgen kann.

Bei dem entsprechenden erfindungsgemäßen Verfahren wird gleichzeitig sichergestellt, dass gegebenenfalls eingelagerte und zu gesundheitlichen Gefährdungen führende Atomsorten entfernt werden.

Die Lösung wird im Kreislauf geführt, von dem der Bypass ausgeht, in dem die Lösung die Einrichtung durchströmt, bei der es sich insbesondere um einen Hg-selektieven Ionentauscher oder um Aktivkohle handelt.

Der Kreislauf mit dem Bypass kann eine externe, wie mobile Anordnung, sein, die zusätzlich zumindest eine Pumpe und vorzugsweise zusätzliche einen Behälter zum Volumenausgleich bzw. zur Pufferung enthält. In dem Bypass selbst können neben der das Quecksilber bzw. dessen Verbindungen bindenden Einrichtung eine oder mehrere Ionentauscher angeordnet sein, um zusätzlich in der Lösung vorhandene Anionen oder Kationen zu binden.

Die neben der Einrichtung vorhandenen Ionentauscher können in Reihe oder parallel zu der Einrichtung geschaltet werden.

In Weiterbildung der Erfindung ist vorgesehen, dass in einem Verfahrensschritt
d) der Lösung ein Oxidationsmittel zudosiert wird.

Dabei wird der Verfahrensschritt d) vor dem Verfahrensschritt b) durchgeführt.

Als Oxidationsmittel kommt insbesondere Permangansäure oder Kaliumpermanganat in Frage, wobei die Konzentration der Permanganationen zwischen 20 mg/L und 1.000 mg/L liegen sollte.

Ein diesbezüglicher Oxidationsschritt muss allerdings dann nicht erforderlich sein, wenn die Komponente aus Schwarzstahl besteht. Sollte jedoch elementares metallisches

Quecksilber in größeren Mengen vorliegen, so muss das Quecksilber zu Hg²⁺ oxidiert werden, damit es in Lösung gehen kann.

Insbesondere wird Oxalsäure einer Konzentration co mit 500 mg/L ≤ co ≤ 3000 mg/L zudosiert, d. h., dass in der Lösung die Konzentration der Oxalsäure zwischen 500 mg/L und 3000 mg/L beträgt. Eine diesbezügliche Menge stellt sicher, dass auch die von der Oxidschicht befreite Oberfläche in einem Umfang abgetragen werden kann, dass eindiffundiertes Quecksilber im erforderlichen Umfang entfernt wird.

Zur Einstellung des pH-Wertes in der wässrigen Lösung kann als die erste Säure eine mineralische oder organische Säure oder eine Mischung dieser verwendet werden. Als mineralische Säure sind insbesondere Schwefelsäure und als organische Säure insbesondere Methylsulfonsäure zu nennen. Gelangt Letztere zum Einsatz, so sollte Methylsulfonsäure in einer Menge zudosiert werden, dass die Methylsulfonsäure in der Lösung in einer Konzentration zwischen 50 mg/L und 500 mg/L oder 100 mg/L und 500 mg/L vorliegt.

Durch die Permanganationen wird Cr-III-Oxid zu Cr-VI oxidiert und liegt in der Lösung als Chromsäure vor.

Mn-VII + Cr-III → Mn-IV + Cr-VI

2 HMnO₄ + Cr₂O₃ + 3 H₂O → 2 Mn(OH)₂ + 2 H₂CrO₄

Ist die Lösung frei von Permanganationen, strömt die Lösung durch den Bypass, in dem das Chromat abgeschieden wird. Hierzu ist ein entsprechender Anionentauscher vorgesehen:

H₂CrO₄ + 2 [AIT-OH] → [AIT₂-CrO₄] + 2 H₂O

Anschließend wird der Bypass geschlossen und Oxalsäure wird zugegeben, durch die die Metalloxidschicht schichtweise abgebaut und in Lösung gebracht wird.

Beispielhaft können folgende Metalloxide und Oberflächenbeläge in Lösung gebracht werden:

Fe₂O₃ + 6 H₂C₂O₄ → 2 [Fe(C_{2O4})₃]³⁻ + 3 H₂O + 6 H⁺

Fe(CO₃)₃ + 3 H₂C₂O₄ → [Fe(C₂O₄)₃]³⁻ + 3 CO₂ + 3 H₂O

NiO + H₂C₂O₄ → Ni(C₂O₄) aq. + H₂O

ZnO + H₂C₂O₄ → Zn(C₂O₄) aq. + H₂O

CaMg₃(CO₃)₄ + 4 H₂C₂O₄ → CaC₂O₄ aq. + 3 MgC₂O₄ aq. + 4 CO₂ + 4 H₂O.

Die Lösung strömt grundsätzlich solange im Kreislauf, bis das Prozessziel erreicht ist, dass kein Quecksilber bzw. keine Quecksilberverbindungen mehr in die Lösung gehen. Dies kann dadurch ermittelt werden, dass die Konzentration von gelöstem Eisen oder die Entstehung von Fe (II)-Ionen zur Bestimmung des Abtrags des Grundmaterials der Komponente bestimmt wird.

Die Entstehung von Wasserstoff oder das Redox-Potential kann genutzt werden, um einen Hinweis für einen Grundmaterialangriff zu erhalten.

Ist das Prozessziel erreicht, wird etwaige noch vorhandene Oxalsäure in der Lösung z. B. durch Zugabe von Wasserstoffperoxid oder Permangansäure zerstört.

Anschließend wird der Bypass geöffnet und die Lösung kann die Einrichtung, in der Quecksilber bzw. dessen Verbindungen gebunden werden, sowie einen weiteren oder mehrere weitere Ionentauscher durchströmen, um Anionen und/oder Kationen zu entfernen.

Mit anderen Worten wird nach Erreichen des Prozessziels, sei es nach vollständiger Abreaktion der Oxalsäure, sei es nach teilweiser Abreaktion der Oxalsäure, der Bypass geöffnet, um die Lösung durch die Einrichtung strömen zu lassen, in der Quecksilber bzw. Quecksilberionen gebunden werden.

Typischerweise ist das Kriterium einer teilweisen Abreaktion und das anschließende Öffnen des Bypasses dann erfüllt, wenn sich ein Gleichgewicht zwischen komplexierten Metallionen und freier Oxalsäure einstellt. Komplexierte Metallionen sind insbesondere die Metallionen der auf der Komponente abgeschiedenen Oxidschicht, können aber auch Metallionen der Komponente selbst sein.

Gegebenenfalls erfolgt anschließend eine weitere Behandlung der Komponente durch z. B. eine Hochdruckdekontamination mit z. B. Wasser und Tensid und/oder Druckluft, um lose an der Oberfläche haftende Rückstände von Quecksilber oder organischen oder anorganischen Belägen zu entfernen. Hierdurch soll verhindert werden, dass eine Rekontamination von Quecksilber erfolgt.

Ist das Grundmaterial der Komponente Edelstahl, so wird das Oxidationsmittel gemäß Verfahrensschritt d) eingesetzt, also insbesondere Permangansäure zudosiert. Dabei kann die Chromkonzentration überwacht werden, da dann, wenn die Permangansäure abreagiert ist, ein Farbwechsel von violett zu gelblich erfolgt. Anschließend strömt die Lösung durch einen Anionentauscher, der sich im Bypass befindet, bis das Chromat und gegebenenfalls andere organische und anorganische Verbindungen abgereinigt sind.

Sodann wird der Bypass geschlossen und es werden - wie zuvor beschrieben - Oxalsäure zudosiert und die beschriebenen weiteren Verfahrensschritte durchgeführt.

Die entsprechenden Schritte können mehrfach wiederholt werden, bis das gewünschte Ergebnis erzielt ist.

Sind zuvor Merkmale in Kombination beschrieben worden, so können diese auch isoliert Schutz genießen oder mit anderen Merkmalen kombiniert werden.

Weitere Einzelheiten, Vorteile und Merkmale der Erfindung ergeben sich nicht nur aus den Ansprüchen, den diesen zu entnehmenden Merkmalen - für sich und/oder in Kombination - , sondern auch aus der nachfolgenden Beschreibung eines der Zeichnungen zu entnehmenden bevorzugten Ausführungsbeispiels.

Es zeigen:
- Fig. 1: eine Prinzipdarstellung eines Kreislaufes zum Entfernen von Quecksilber und/oder dessen Verbindungen von einer Komponente,
- Fig. 2: einen erfindungsgemäßen Verfahrensablauf und
- Fig. 3: einen zeitabhängigen Ionenkonzentrationsverlauf.

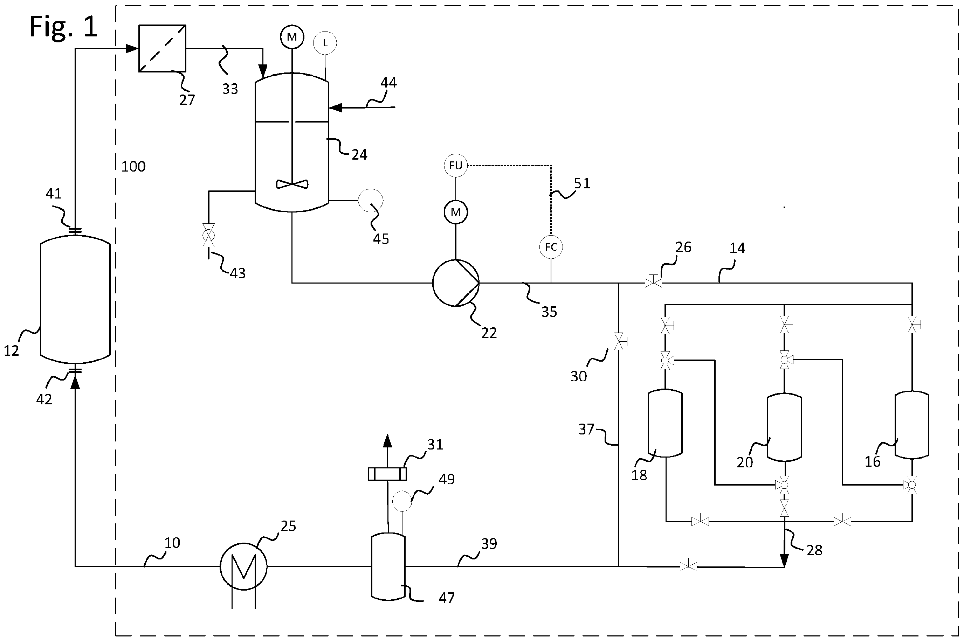

Anhand der Prinzipdarstellung der Fig. 1 soll das erfindungsgemäße Verfahren erläutert werden, mittels einer mobilen Einheit von bzw. aus einer Komponente 12 Quecksilber und/oder Quecksilberverbindungen zu entfernen. Sodann kann die Komponente 12 als normaler Abfall entsorgt werden. Die mobile Einheit wird mit der Komponente 12 verbunden, um einen Kreislauf 10 zu bilden, wie dies prinzipiell die Fig. 1 verdeutlicht.

Von dem Kreislauf 10 geht ein Bypass 14 aus, in dem wahlweise parallel oder hintereinander geschaltet Einrichtungen 16, 18, 20 angeordnet sind, um Quecksilber bzw. Quecksilberionen und andere anorganische und organische Beläge, die auf der Oberfläche abgeschieden sind, bzw. Ionen, die in diesen eingelagert sind, zu entfernen. Hierzu strömt in dem Kreislauf 10 und im erforderlichen Umfang durch den Bypass 14 eine saure Lösung, wie nachstehend beschrieben wird.

Die Einrichtung 16 kann ein quecksilberselektiver Ionentauscher oder ein Aktivkohle enthaltendes Filter sein, um Quecksilber und dessen Verbindungen aus der Lösung zu entfernen. Bei der Einrichtung 18 kann es sich um einen Anionentaucher (AIT) und bei der Einrichtung 20 um einen Kationentauscher (KIT) handeln.

Wie der Prinzipdarstellung zu entnehmen ist, sind den Einrichtungen 16, 18, 20 Ventile vor- und nachgeschaltet, um die Einrichtungen 16, 18, 20 einzeln oder in Reihe oder parallel von der Lösung durchströmen zu lassen. Insoweit ist die zeichnerische Darstellung selbsterklärend.

Bei der Komponente 12 kann es sich um einen zu dekontaminierenden Behälter, einen Wärmetauscher, Rohrleitungen oder ähnliches handeln, also um Komponenten, die insbesondere in der Gas- und/oder Ölförderungsindustrie zum Einsatz gelangen.

Alternativ besteht die Möglichkeit, zu dekontaminierende Komponente in einem Behälter anzuordnen, der seinerseits von der Lösung durchströmt wird. In diesem Fall wird die Komponente auch umströmt.

Wie sich aus der Prinzipdarstellung der Fig. 1 ergibt, sind in dem Kreislauf 10 eine Förderpumpe 22 sowie ein weiterer Behälter 24 angeordnet, der als Vorlagebehälter bzw. zum Volumenausgleich bzw. zur Pufferung dient.

In dem Kreislauf 10 können des Weiteren eine Heizung 25, mechanische Filter 27 und z. B. an einem Abgasaustritt 29 Aktivkohlefilter und ein Rekombinator 31 zur Wasserstoffrekombination zu H₂O vorgesehen sein.

Die zuvor beschriebenen Einrichtungen einschließlich der zur Bildung des Kreislaufs erforderlichen Leitungen 33, 35, 37, 39 sowie der Bypass 14 mit den Einrichtungen 16, 18, 20 sind im Ausführungsbeispiel in einer mobilen Einheit, wie Container, angeordnet, die Anschlüsse 41, 42 aufweist, die mit der Komponente 12 verbunden werden. Hierdurch wird der Kreislauf 10 gebildet.

Die in der mobilen Einheit vorhandenen Elemente und Leitungen sind in der Fig. 1 in dem Bereich 100 dargestellt, der von unterbrochenen Linien umgeben ist.

Im Ausführungsbeispiel soll die Innenoberfläche des Behälters 12 als Komponente gereinigt werden. Hierzu wird zunächst die mobile Einheit an dem Behälter 12 angeschlossen, um den Kreislauf 10 zu bilden. Sodann fließt in dem Kreislauf 10 Wasser, das auf eine Temperatur zwischen 40 °C und 90 °C erwärmt wird, wobei bevorzugterweise eine Temperatur von 60 °C zu wählen ist.

Der Lösung wird eine erste Säure zudosiert, um den pH-Wert in der Lösung z. B. zwischen 2,3 und 5 einzustellen.

Bei der ersten Säure kann es sich um eine mineralische oder organische Säure handeln, wobei bevorzugterweise Methylsulfonsäure und/oder Schwefelsäure zu nennen sind.

Wird Methylsulfonsäure eingesetzt, so sollte diese in der Lösung in einer Konzentration zwischen 50 mg/L und 500 mg/L, insbesondere zwischen 100 und 500 mg/L, vorliegen.

Handelt es sich bei dem Behälter 12 um einen solchen aus Schwarzmetall, kann gleichzeitig mit der ersten Säure oder anschließend Oxalsäure in den Kreislauf 10 dosiert werden, wobei die Konzentration der Oxalsäure in der Lösung zwischen 500 mg/L und 3.000 mg/L eingestellt werden sollte.

Gegebenenfalls kann vor Zugabe der Oxalsäure Permangansäure zudosiert werden, da hierdurch das Auflösen anorganischer und organischer Beläge positiv beeinflusst wird. Die Oxalsäure wird in diesem Fall erst dann zudosiert, wenn die Permangansäure abreagiert ist, und die Lösung sodann über einen in dem Bypass 14 vorhandenen Anionentauscher 18 geführt wird.

Nach der Abreaktion der Permangansäure wird die Lösung bei geöffnetem Ventil 26 im Bypass 14 über den Anionentauscher 18 und sodann durch die in dem Kreislauf 10 mündende Leitung 28 geführt.

Wird der Bypass 14 durchströmt, so kann das Ventil 30 geschlossen sein, das sich im Kreislauf 10 vor der Verbindung mit der Leitung 28 des Bypasses 14 befindet.

Nach dem Schließen des Bypasses 14 und dem anschließenden Zudosieren von Oxalsäure erfolgt eine Überwachung der Konzentration von Metallionen, insbesondere Eisen(II)-Ionen, und/oder Oxalsäure und/oder Quecksilber und/oder pH-Wert und/oder Leitfähigkeit der Lösung und/oder Redoxpotential und/oder Temperatur und/oder Sauerstoffgehalt in der Lösung, um Rückschlüsse über die abgetragene Oxidschicht bzw. abgetragenes Grundmaterial der Komponente 12 und damit Rückschlüsse ziehen zu können, ob Quecksilber bzw. dessen Verbindungen im erforderlichen Umfang von der Komponente 12 entfernt worden ist, d. h., dass Quecksilber bzw. dessen Verbindungen nicht mehr in Lösung gehen.

Gehen keine Metallionen der Oxidschicht mehr in Lösung bzw. nachdem sich ein Gleichgewicht zwischen komplexierten Metallionen und freier Oxalsäure eingestellt hat, also eine teilweise Abreaktion der Oxalsäure erfolgt ist, wird der Bypass 14 erneut geöffnet, um die Lösung über die Einrichtung 16 zu führen, in der Quecksilber bzw. Quecksilberionen gebunden werden.

Wie der Prinzipdarstellung zu entnehmen ist, erfolgt das Zudosieren der ersten Säure sowie der Oxalsäure und gegebenenfalls - sofern erforderlich - Permangansäure in den auch als Vorlagebehälter zu bezeichnenden Pufferbehälter 24. Dies wird durch den Pfeil 44 angedeutet.

Dem Behälter 24 können Proben entnommen werden, um die Konzentration von Metallionen, insbesondere Eisen(II)-Ionen, zu messen (Probenentnahme 43).

In dem Vorlagebehälter 24 können des Weiteren Inline-Messungen von z. B. pH-Wert, Redox-Potential, Leifähigkeit o. ä. durchgeführt werden (Bezugszeichen 45).

Aus der Prinzipdarstellung wird des Weiteren erkennbar, dass in dem Kreislauf 10 eine Entgasungseinrichtung 47 geschaltet ist, die mit dem Rekombinator 31 verbunden ist. An die Entgasungseinrichtung 47 können auch Gassensoren für die Bestimmung z. B. von H₂, O₂ und/oder CO₂ angeschlossen sein (Bezugszeichen 49).

Ferner ist eine Durchflussregelung (Bezugszeichen 51) vorgesehen, um die Strömungsgeschwindigkeit in dem Kreislauf 10 zu regeln bzw. zu steuern.

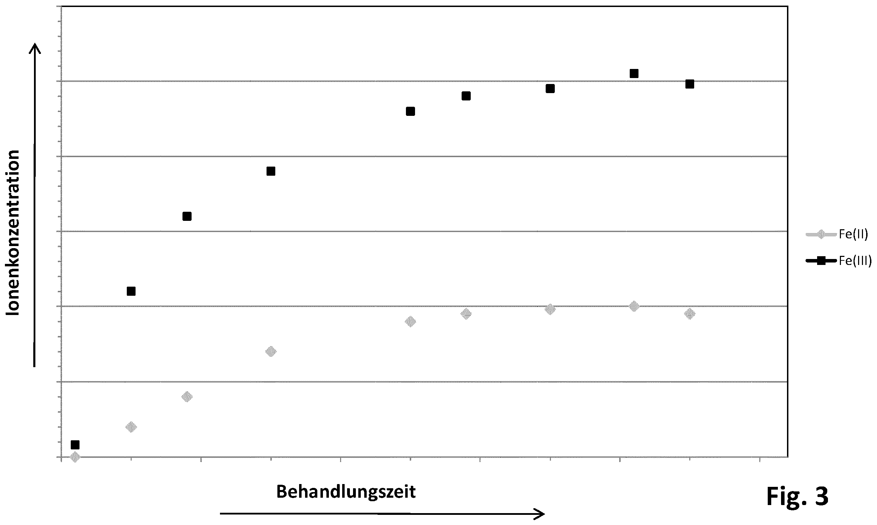

Anhand der Fig. 3 soll die Dauer des Einwirkens der Lösung auf die Komponente 12 prinzipiell verdeutlichen werden, und zwar anhand der Fe(II)- und Fe(III)-Ionen. In der Fig. 3 ist die Behandlungszeit, also Einwirkzeit, gegenüber der Ionenkonzentration aufgetragen. Man erkennt, dass nach einer gewissen Einwirkzeit die Konzentration der Ionen ein Plateau erreichen. Hieraus kann der Schluss gezogen werden, dass entweder die Säure abreagiert ist, sodass gegebenenfalls ein neuer Behandlungszyklus zuvor beschriebener Art durchgeführt wird, oder dass Ionen aus und/oder von der Komponente 12 nicht mehr herausgelöst werden können, also ein Gleichgewichtszustand erreicht ist. Dieser ist insbesondere bei der Behandlung von Komponenten aus Edelstahl feststellbar.

Wird z. B. die Quecksilberionenkonzentration ermittelt, kann dann, wenn sich diese nicht mehr ändert, der Rückschluss gezogen werden, dass Quecksilber bzw. Quecksilberverbindungen im hinreichenden Umfang von der Komponente bzw. dessen Belägen entfernt worden ist.

Die Messgrößen können mit üblichen Messfühlern oder Messsonden, z. B. elektrochemisch, oder mit üblichen Analysemethoden, z. B. spektroskopisch, fotometrisch, bestimmt werden, die Konzentration der Oxalsäure z. B. durch Titration. Insoweit können Messverfahren zur Anwendung gelangen, die dem vorbekannten Stand der Technik zu entnehmen sind.

Insbesondere durch die Bestimmung der Konzentration von gelösten Fe(II)-Ionen während des Prozesses können Rückschlüsse auf die Dicke der abgetragenen Oxidschicht bzw. den Abtrag des Grundmaterials der Komponente 12 gezogen werden. Durch Kenntnis der Werkstoffzusammensetzung bzw. Oxidzusammensetzung, Werkstoffdichte, Oberfläche der behandelten Komponente und gelösten Menge Eisen kann die mittlere Dicke der abgetragenen Oberfläche errechnet werden.

Ergibt eine Überprüfung, dass kein Quecksilber bzw. keine Quecksilberverbindung mehr in Lösung geht, erfolgt ein Zerstören der noch vorhandenen Oxalsäure z. B. durch Zugabe von Wasserstoffperoxid oder Permangansäure, um sodann bei geöffnetem Bypass 14 die Lösung über eine oder mehrere der Einrichtungen 16, 18, 20, zumindest jedoch über den quecksilberselektiven Ionentauscher bzw. die Aktivkohle (Einrichtung 16) abzureinigen, bis die gewünschte Wasserqualität erreicht ist.

Sollte sich herausstellen, dass Quecksilber bzw. dessen Verbindungen nicht im erforderlichen Umfang entfernt worden sind, kann der diesbezügliche Prozess wiederholt werden.

Gegebenenfalls kann anschließend eine Hochdruckdekontamination der behandelten Fläche der Komponente 12 erfolgen, um eine Rekontamination von Quecksilber auf der Materialoberfläche zu verhindern. Eine diesbezügliche Dekontamination kann z. B. mit Wasser und Tensiden und/oder Druckluft durchgeführt werden.

Ist das Material der Komponente 12 Edelstahl, so ist vor dem Zudosieren von Oxalsäure, jedoch nach Einstellen des pH-Wertes durch die erste Säure vorgesehen, dass Permangansäure oder Kaliumpermanganat zudosiert wird, und zwar in einer Konzentration zwischen 20 mg/L und 1.000 mg/L an Permanganationen. Hierdurch wird erreicht, dass das vorhandene Chrom(III)-Oxid zu Chrom(VI) oxidiert wird, das in der Lösung als Chromsäure vorliegt. Nach Abreaktion der Permangansäure - dies wird durch Farbwechsel von violett zu gelblich erkennbar - wird bei geöffnetem Bypass 14 die Lösung zumindest durch den Anionentauscher 18 geleitet, um Chromate und gegebenenfalls organische und anorganische Verbindungen abzureinigen. Anschließend wird Oxalsäure in zuvor beschriebener Weise zudosiert, um das Verfahren entsprechend weiterzuführen.

Die Zugabe von Permangansäure, sofern erforderlich, das Abreinigen über Ionentauscher, die Dosierung von Oxalsäure und die erneute Abreinigung kann in einem Umfang wiederholt werden, um ein gewünschtes Ergebnis zu erzielen.

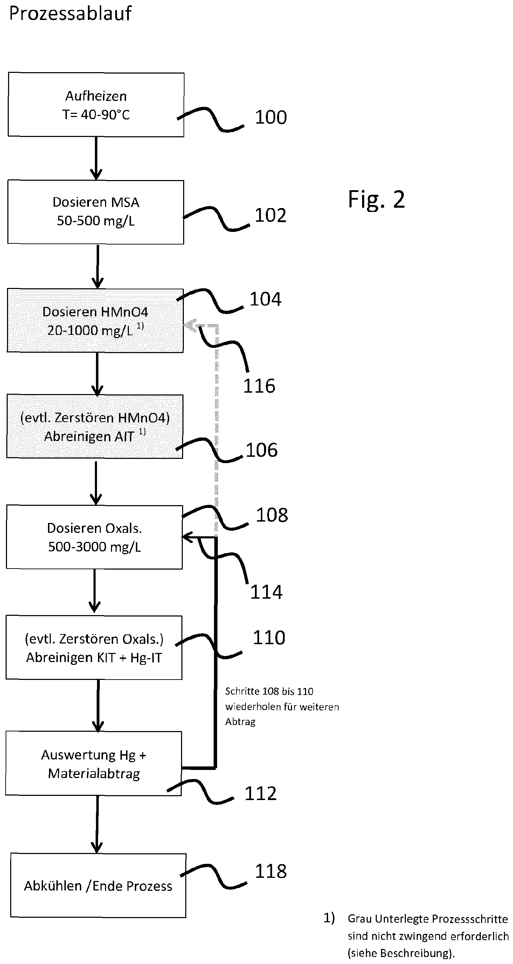

Das erfindungsgemäße Verfahren ist auch dem Prozessablauf gemäß Fig. 2 zu entnehmen. Nach Aufheizen von im Kreislauf 10 geführtem Wasser (Verfahrensschritt 100) auf 40 °C - 90 °C wird mittels einer ersten Säure - in der Darstellung mittels Methylsulfonsäure (MSA) - der pH-Wert auf einen Wert vorzugsweise zwischen 2,3 und 5 eingestellt, wobei die Konzentration der Methylsulfonsäure in der Lösung zwischen 50 bis 100 mg/L und 500 mg/L liegt (Verfahrensschritt 102). Sofern erforderlich wird sodann in einem Verfahrensschritt 104 Permangansäure zudosiert, und zwar in Konzentrationen zwischen 20 mg/L und 1.000 mg/L Permanganationen.

Nach gegebenenfalls erforderlicher Zerstörung der Permangansäure, sofern keine vollständige Abreaktion erfolgt ist, strömt die Lösung durch den im Bypass 14 vorhandenen Anionentauscher 18, um insbesondere Chrom-Ionen zu binden (Verfahrensschritt 106).

Anschließend wird der Bypass 14 wieder geschlossen und Oxalsäure wird in einem Umfang zudosiert, dass die Konzentration in der Lösung zwischen 500 mg/L und 3.000 mg/L beträgt (Verfahrensschritt 108). Die Lösung wird sodann im Kreislauf 10 geführt.

In dem Verfahrensschritt 110 wird die Lösung sodann durch den Bypass 14 geleitet. Zuvor kann gegebenenfalls noch vorhandene Oxalsäure durch Zugabe von z. B. Permangansäure und/oder H₂O₂ zerstört werden. In dem Bypass 14 wird die Lösung über die Einrichtung 16, d. h. über den quecksilberselektiven Ionentauscher oder Aktivkohle geleitet. Die Lösung sollte des Weiteren über den Kationentauscher 12 strömen.

Es erfolgt eine Überprüfung, ob weiterhin Quecksilber in Lösung geht bzw. in welchem Umfang eine Materialabtrag erfolgt ist (Verfahrensschritt 112). Sollte weiterhin Quecksilber gelöst werden müssen bzw. der Materialabtrag zu niedrig sein, wird das Verfahren entsprechend der Pfeile 114, 116 wiederholt.

Ist das Prozessziel erreicht, wird die Lösung abgekühlt (Verfahrensschritt 118), der Kreislauf 10 von der Komponente 12 getrennt und diese sodann entsorgt, ohne dass es sich hierbei um Sondermüll handelt.

## Patentansprüche

1. Verfahren zum Entfernen von in oder an einer Komponente (12), insbesondere der Öl- oder Gasförderindustrie, und/oder deren Oberfläche ab- oder eingelagertem Quecksilber und/oder dessen Verbindungen, umfassend zumindest die Verfahrensschritte
a) Behandeln der Komponente mit einer die Komponente um- oder durchströmenden im Kreislauf (10) geführten sauren Lösung durch Zugabe einer ersten Säure, mittels der der pH-Wert der Lösung eingestellt wird,
b) Zudosierung von Oxalsäure als zweite Säure,
c) nach zumindest teilweiser Abreaktion der Oxalsäure Zuführen der Lösung zu einer Quecksilberionen und/oder Quecksilber bindenden Einrichtung (16), die in einem von dem Kreislauf ausgehenden Bypass (14) angeordnet ist.

2. Verfahren nach Anspruch 1,
**dadurch gekennzeichnet,**
**dass** die Lösung in dem Bypass (14) einen quecksilberselektiven Ionentauscher und/oder Aktivkohle als die Einrichtung (16) durchströmt und die Lösung in dem Bypass (14) vorzugsweise zumindest eine weitere parallel oder in Reihe zu der Einrichtung (16) geschaltete Einrichtung (18, 20) in Form eines Ionentauschers durchströmt.

3. Verfahren nach zumindest einem der vorhergehenden Ansprüche,
**dadurch gekennzeichnet,**
**dass** in dem Bypass (14) weitere parallel und/oder in Reihe geschaltete von der Lösung durchströmte Ionentauscher (18, 20) angeordnet werden.

4. Verfahren nach zumindest einem der vorhergehenden Ansprüche,
**dadurch gekennzeichnet,**
**dass** der Lösung Oxalsäure in einem Umfang zudosiert wird, dass eine Konzentration co mit 500 mg/L ≤ co ≤ 3000 mg/L vorliegt.

5. Verfahren nach zumindest Anspruch 1,
**dadurch gekennzeichnet,**
**dass** vor dem Verfahrensschritt b) in einem Verfahrensschritt
d) der Lösung ein Oxidationsmittel zudosiert wird.

6. Verfahren nach zumindest einem der vorhergehenden Ansprüche,
**dadurch gekennzeichnet,**
**dass** der Verfahrensschritt d) bei aus Schwarzstahl bestehender Komponente unterbleibt.

7. Verfahren nach zumindest einem der vorhergehenden Ansprüche,
**dadurch gekennzeichnet,**
**dass** zum Behandeln der Komponente die Lösung, gegebenenfalls vor Zudosieren der ersten Säure, auf eine Temperatur T mit 40 °C ≤ T ≤ 90 °C, insbesondere mit 55 °C ≤ T 65 °C, besonders bevorzugt T ≈ 60 °C, eingestellt wird.

8. Verfahren nach zumindest einem der vorhergehenden Ansprüche,
**dadurch gekennzeichnet,**
**dass** als die erste Säure eine mineralische Säure, wie Schwefelsäure, und/oder eine organische Säure, wie Methylsulfonsäure, eingesetzt wird, wobei bei einem Einsatz von Methylsulfonsäure deren Konzentration cm in der Lösung vorzugsweise beträgt 50 bis 100 mg/L ≤ c_{M} ≤ 500 mg/L .

9. Verfahren nach zumindest einem der vorhergehenden Ansprüche,
**dadurch gekennzeichnet,**
**dass** nach im gewünschten Umfang erfolgtem Entfernen des Quecksilbers bzw. der Quecksilberverbindungen von und/oder aus der Komponente in der Lösung vorhandene Oxalsäure, insbesondere durch Zugabe von Wasserstoffperoxid oder Permangansäure, zerstört und sodann die Lösung abgereinigt wird.

10. Verfahren nach zumindest einem der vorhergehenden Ansprüche,
**dadurch gekennzeichnet,**
**dass** nach dem Entfernen des Quecksilbers bzw. der Quecksilberverbindungen mittels der Lösung die Komponente (12) einer Hochdruckdekontamination ausgesetzt wird, insbesondere mittels Wasser und Tensiden und/oder Druckluft.

11. Verfahren nach zumindest einem der vorhergehenden Ansprüche,
**dadurch gekennzeichnet,**
**dass** die Komponente (12) der Lösung ausgesetzt wird, bis ein Oberflächenabtrag A mit 0,1 µm ≤ A ≤ 1000 µm, insbesondere 0,1 mµ ≤ A ≤ 500 µm, besonders bevorzugt 0,1 µm ≤ A ≤ 250 µm, erfolgt ist.

12. Verfahren nach zumindest Anspruch 11,
**dadurch gekennzeichnet,**
**dass** der Oberflächenabtrag durch Bestimmung der Konzentration von MetallIonen, insbesondere Fe(II)-Ionen, bestimmt wird.

13. Verfahren nach zumindest einem der vorhergehenden Ansprüche,
**dadurch gekennzeichnet,**
**dass** die Komponente (12) an einen externen Kreislauf als der Kreislauf (10) mit dem Bypass (14) angeschlossen wird, wobei in dem Kreislauf zumindest eine Pumpe (22) und vorzugsweise ein Behälter (24) angeordnet sind, oder dass die Komponente (12) in einem Behälter angeordnet wird, der an den Kreislauf (10) angeschlossen wird.

14. Verfahren nach zumindest einem der vorhergehenden Ansprüche,
**dadurch gekennzeichnet,**
**dass** der pH-Wert der Lösung auf einen Wert zwischen 2,3 und 5 eingestellt wird.

15. Verfahren nach zumindest einem der vorhergehenden Ansprüche,
**dadurch gekennzeichnet,**
**dass** zeitabhängige Konzentrationsänderung von Metallionen, insbesondere Fe(II)- und/oder Fe(III)-Ionen, überwacht wird und dass nach Erreichen einer gleichbleibenden oder im Wesentlichen gleichbleibenden Konzentration die Lösung durch den Bypass geleitet oder der Lösung erneut Oxalsäure zudosiert wird.

## Claims

1. A method of removing mercury and/or its compounds deposited on or embedded inside or on a component (12), in particular of the oil or gas-producing industry, and/or its surface, comprising at least the method steps
a) Treatment of the component with an acidic solution passing through a circuit (10) and flowing around or through the component by addition of a first acid, by means of which the pH value of the solution is adjusted,
b) Addition of oxalic acid as a second acid,
c) after an at least partial reaction of the oxalic acid, passing of the solution to a device (16) binding mercury ions and/or mercury and arranged in a bypass (14) extending from the circuit.

2. The method according to claim 1,
**characterized in**
**that** the solution in the bypass (14) flows through a mercury-selective ion exchanger and/or activated carbon as the device (16), and the solution in the bypass (14) preferably flows through at least one further device (18, 20) in the form of an ion exchanger connected in parallel or in series to the device (16).

3. The method according to at least one of the preceding claims,
**characterized in**
**that** further ion exchangers (18, 20) connected in parallel and/or in series and flowed through by the solution are arranged in the bypass (14).

4. The method according to at least one of the preceding claims,
**characterized in**
**that** oxalic acid is added to the solution to an extent such that a concentration co of 500 mg/L ≤ c_{O} ≤ 3000 mg/L is obtained.

5. The method according to at least claim 1,
**characterized in**
**that**, prior to the method step b), in a method step
d) an oxidizing means is added to the solution.

6. The method according to at least one of the preceding claims,
**characterized in**
**that** the method step d) is not performed when the component consists of untreated steel.

7. The method according to at least one of the preceding claims,
**characterized in**
**that** for treatment of the component the solution is adjusted, where appropriate prior to addition of the first acid, to a temperature T of 40 °C ≤ T ≤ 90 °C, in particular 55 °C ≤ T 65 °C, particularly preferably T ≈ 60 °C.

8. The method according to at least one of the preceding claims,
**characterized in**
**that** a mineral acid such as sulfuric acid, and/or an organic acid such as methyl sulfonic acid, is used as the first acid, wherein in the event of methyl sulfonic acid being used its concentration c_{M} in the solution is preferably 50 to 100 mg/L ≤ c_{M} ≤ 500 mg/L.

9. The method according to at least one of the preceding claims,
**characterized in**
**that** after removal to the required extent of the mercury and/or mercury compounds from and/or out of the component, oxalic acid present in the solution, in particular by the addition of hydrogen peroxide or permanganic acid, is destroyed and the solution is then cleaned.

10. The method according to at least one of the preceding claims,
**characterized in**
**that** after removal of the mercury and/or mercury compounds by means of the solution, the component (12) is subjected to a high-pressure decontamination, in particular by means of water and surfactants and/or compressed air.

11. The method according to at least one of the preceding claims,
**characterized in**
**that** the component (12) is subjected to the solution until a surface removal A of 0.1 µm ≤ A ≤ 1000 µm, in particular 0.1 µm ≤ A ≤ 500 µm, particularly preferably 0.1 µm ≤ A ≤ 250 µm, is achieved.

12. The method according to at least claim 11,
**characterized in**
**that** the surface removal is determined by determination of the concentration of metal ions, in particular of Fe(II) ions.

13. The method according to at least one of the preceding claims,
**characterized in**
**that** the component (12) is connected to an external circuit as the circuit (10) with the bypass (14), wherein at least one pump (22) and preferably one container (24) are arranged in the circuit, or that the component (12) is arranged in a container connected to the circuit (10).

14. The method according to at least one of the preceding claims,
**characterized in**
**that** the pH value of the solution is adjusted to a value between 2.3 and 5.

15. The method according to at least one of the preceding claims,
**characterized in**
**that** time-dependent change in the concentration of metal ions, in particular of Fe(II) and/or Fe(III) ions, is monitored and that after attaining a constant or substantially constant concentration the solution is passed through the bypass or oxalic acid is again added to the solution.

## Revendications

1. Procédé destiné à éliminer le mercure et/ou ses composés déposés ou emprisonnés dans ou sur un composant (12), notamment de l'industrie pétrolière ou gazière, et/ou à sa surface, comprenant au moins les étapes suivantes :
a) Traitement du composant avec une solution acide introduite dans le circuit (10), traversant ou entourant le composant, par l'ajout d'un premier acide, au moyen duquel la valeur du pH de la solution est réglée,
b) Ajout dosé d'acide oxalique comme second acide,
c) après au moins une réaction partielle de l'acide oxalique, distribution de la solution à un équipement (16) liant les ions de mercure et/ou le mercure, lequel équipement est disposé dans une dérivation (14) partant du circuit.

2. Procédé selon la revendication 1,
**caractérisé en ce**
**que** la solution dans la dérivation (14) traverse un échangeur d'ions sélectif pour le mercure et/ou du charbon actif jouant le rôle de l'équipement (16) et que la solution dans la dérivation (14) traverse de préférence au moins un autre équipement (18, 20) sous forme d'échangeur d'ions, branché en parallèle ou en série à l'équipement (16).

3. Procédé selon au moins l'une des revendications précédentes,
**caractérisé en ce**
**que** dans la dérivation (14) sont disposés d'autres échangeurs d'ions (18, 20) branchés en parallèle ou en série, traversés par la solution.

4. Procédé selon au moins l'une des revendications précédentes,
**caractérisé en ce**
**qu'**est ajouté sous forme dosée de l'acide oxalique à la solution de sorte à avoir une concentration co telle que 500 mg/L ≤ co ≤ 3000 mg/L.

5. Procédé selon au moins la revendication 1,
**caractérisé en ce**
**qu'**avant l'étape b) du procédé au cours d'une étape
d) un agent oxydant est ajouté sous forme dosée à la solution.

6. Procédé selon au moins l'une des revendications précédentes,
**caractérisé en ce**
**que** l'étape d) est supprimée pour tout composant constitué d'acier noir.

7. Procédé selon au moins l'une des revendications précédentes,
**caractérisé en ce**
**que** pour traiter le composant, la solution est réglée à une température T telle que 40 °C ≤ T ≤ 90 °C, notamment telle que 55 °C ≤ T ≤ 65 °C, de préférence notamment T ≈ 60 °C.

8. Procédé selon au moins l'une des revendications précédentes,
**caractérisé en ce**
**qu'**est utilisé comme premier acide un acide minéral tel que l'acide sulfurique et/ou un acide organique, tel que l'acide méthylsulfonique, sachant que lors d'une utilisation d'acide méthylsulfonique, sa concentration cM dans la solution est de préférence telle que 50 à 100 mg/L ≤ cM ≤ 500 mg/L.

9. Procédé selon au moins l'une des revendications précédentes,
**caractérisé en ce**
**qu'**après l'élimination du mercure ou des composés de mercure de et/ou hors du composant dans la quantité souhaitée, dans la solution, l'acide oxalique présent est détruit, notamment par ajout de peroxyde d'hydrogène ou d'acide permanganique et qu'ensuite la solution est purifiée.

10. Procédé selon au moins l'une des revendications précédentes,
**caractérisé en ce**
**qu'**après l'élimination du mercure ou des composés de mercure au moyen de la solution, le composant (12) subit une décontamination haute pression, notamment au moyen d'eau, d'agents tensioactifs et/ou d'air comprimé.

11. Procédé selon au moins l'une des revendications précédentes,
**caractérisé en ce**
**que** le composant (12) est exposé à la solution jusqu'à obtenir un retrait superficiel A tel que 0,1 µm ≤ A ≤ 1000 µm, notamment 0,1 µm ≤ A ≤ 500 µm, notamment de préférence 0,1 µm ≤ A ≤ 250 µm.

12. Procédé selon au moins la revendication 11,
**caractérisé en ce**
**que** le retrait superficiel est déterminé par la détermination de la concentration des ions métalliques, notamment des ions Fe(II).

13. Procédé selon au moins l'une des revendications précédentes,
**caractérisé en ce**
**que** le composant (12) est raccordé à un circuit externe comme circuit (10) avec la dérivation (14), sachant que sont disposés dans le circuit, au moins une pompe (22) et de préférence un récipient (24), ou que le composant (12) est disposé dans un récipient qui est raccordé au circuit (10).

14. Procédé selon au moins l'une des revendications précédentes,
**caractérisé en ce**
**que** la valeur du pH de la solution est réglée à une valeur comprise entre 2,3 et 5.

15. Procédé selon au moins l'une des revendications précédentes,
**caractérisé en ce**
**qu'**un changement de concentration en fonction du temps, des ions métalliques, notamment des ions de Fe(II) et/ou Fe(III), est surveillé et qu'après qu'une concentration constante ou essentiellement constante est atteinte, la solution est conduite à travers la dérivation ou de l'acide oxalique est à nouveau ajouté de manière dosée à la solution.
